# EUROPÄISCHE PATENTANMELDUNG

(11) **EP 0 589 077 A1**
(43) Veröffentlichungstag der Anmeldung: **30.03.1994**
(21) Anmeldenummer: 92116203.8
(22) Anmeldetag: 22.09.1992
(51) Int. Cl.: B29B 17/02, C08J 11/20, B29K 21/00

(54) **Verfahren zur Herstellung von Flüssiggummi im Recyclingprozess**

(71) Anmelder: EUTEC CONSULTING GmbH, D-64653 Lorsch (DE)
(72) Erfinder: Jakuschewitsch, Stanislaw V., Minsk (RU); Hermey, Kurt, W-6143 Lorsch (DE)
(74) Vertreter: Kruspig, Volkmar, Dipl.-Ing.

(57) **Zusammenfassung**

Die Erfindung betrifft ein praxiswirksames, großindustriell anwendbares Verfahren zur Herstellung von Flüssiggummi im Recyclingprozeß von Altgummiprodukten durch thermische Zersetzungsbehandlung.
Es ist eine kontinuierliche Prozeßführung unter minimalem externen Energieaufwand durchführbar. Die erhaltenen Produkte können bereits innerhalb des Prozesses weiterveredelt bzw. verarbeitet werden.
Verfahrensgemäß erfolgt zunächst eine Einlage unzerkleinerter Altgummiprodukte, z.B. von Altreifen, in spezielle Kassetten. Diese Kassetten werden in eine Reaktionseinheit eingebracht, welche hermetisch abgeschlossen ist. In einem mit der Reaktionseinheit verbundenen Behälter erfolgt die Erhitzung des Zersetzungs- und Auflösemittels. Zwischen dem Tank für die Erhitzung des Zersetzungs- und Auflösemittels und dem eigentlichen Reaktionsgefäß wird ein Kreislauf dahingehend realisiert, daß ein ständig überwachter Konzentrations- und Füllungsgrad bezüglich des Zersetzungsmittels im Reaktionstank gegeben ist. Als Zersetzungs- und Auflösemittel wird als hochsiedender Rückstand der Erdöldestillation Masut verwendet.
Nach erfolgter Zersetzung der Altgummiprodukte im Reaktionsgefäß, d.h. dem thermischen Abbau des Gummis und dem Aufbrechen der Schwefelbindungen, entsteht eine Mischung aus gelösten Gummikomponenten und weiteren Bestandteilen. Die im Reaktionsgefäß enthaltene Gummilösung kann durch Zugabe eines Phenolformaldehydharzes und mittels anschließender thermischer Stabilisierung in ein neues Produkt überführt werden. Erfindungsgemäß werden die in der Reaktionseinheit entstehenden Gase aufgefangen und kondensiert. Aus dem Kondensat wird Benzin und/oder Dieselöl gewonnen.

## Beschreibung

Die Erfindung betrifft ein Verfahren zur Herstellung von Flüssiggummi im Recyclingprozeß von Altgummiprodukten durch thermische Zersetzungsbehandlung und eine Anordnung zur Durchführung eines derartigen Verfahrens.

Insbesondere seit den letzten Jahren gewinnt unter ökologischen Gesichtspunkten das Recycling von schwer- oder nicht verrottbaren Materialien an Bedeutung.
Ein besonderes Problem besteht darin, den in großen Mengen anfallenden Bestand an Altgummiprodukten, beispielsweise von Altreifen, in einer möglichst umweltneutralen Art und Weise zu verarbeiten. Ein wesentliches Problem des Recyclings besteht in dem zur Durchführung des eigentlichen Recyclingprozesses erforderlichen Energiebedarf.

So sind mechanische Verfahren bekannt, welche im wesentlichen eine Zerkleinerung des Altgummis vornehmen, um auf diese Weise Zuschlagstoffe zu erhalten, welche zum Beispiel für den Bau von Fahrbahndecken oder dgl. verwendet werden können. Besonders problematisch ist hierbei die Trennung der Gummibestandteile von artfremden Werkstoffen, wie zum Beispiel Stahl, Textilien und dgl. mehr.

Ebenfalls ist es bekannt, den Altgummi, beispielsweise Altautoreifen, tiefen Temperaturen auszusetzen bis ein Versprödungsgrad erreicht ist, welcher bei nachfolgender Zerkleinerung eine Trennung von den übrigen Nichtgummibestandteilen ermöglicht. Die beschriebenen mechanischen Verfahren sind sehr kosten- und zeitaufwendig und konnten sich deshalb in der breiten Praxis bisher nicht durchsetzen.

Aus der deutschen Offenlegungsschrift DE-OS 34 20 609 ist ein Verfahren zum Trennen von Gummi und von diesem ganz oder teilweise eingeschlossenen Bauteilen bekannt, wobei eine Trennung der Bestandteile dadurch erreicht wird, daß das zu behandelnde Teil mit Mineralöl in flüssiger oder dampfförmiger Phase bei einer Temperatur von über 150°C, vorzugsweise zwischen 180 und 320°C, in Einwirkung gebracht wird. Anschließend werden die Bauteile, welche aus anderen Werkstoffen bestehen, von der entstandenen flüssigen Phase oder den lose anhaftenden Gummiresten mechanisch getrennt.
Eine kontinuierliche Beschickung eines Reaktors mit Altgummi sowie eine darauf abgestellte Prozeßführung ist mit einer Lösung nach DE-OS 34 20 609 nicht möglich. Außerdem ist zur Entfernung von zum Beispiel metallischen Bestandteilen eine zusätzliche mechanische Krafteinwirkung erforderlich.
Das erhaltene flüssige Produkt aus überwiegend Gummibestandteilen kann aufgrund seiner unbefriedigenden Eigenschaften, insbesondere der schlechten Bindeeigenschaften, lediglich als 20%iger Bitumenersatz, beispielsweise bei der Herstellung eines Asphaltbetons, eingesetzt werden.

Das Verfahren zur Herstellung von pechartigen Massen gemäß DE-OS 27 07 158 erfordert zunächst die Bildung eines sog. Schlamms aus Altkautschuk und einem Erdöllösungsmittel mit einer thermisch stabilen Erdölfraktion. Der Schlamm wird bei einer Temperatur zwischen 177 und 454°C über eine ausreichende Zeitspanne erhitzt, um ihn in eine homogene Masse mit einer weichen, pechartigen Konsistenz zu überführen.
Zur Bildung des sog. Schlamms ist es erforderlich, die Altgummiprodukte mit hohem mechanischen Aufwand zu zerkleinern. Eine derartige Zerkleinerung bis zu einer Teilchengröße 40-200 mesh oder in Würfelform mit einer Kantenlänge von 1,27 - 12,7 mm kann beispielsweise durch einen Mahlvorgang mit gegebenenfalls kombinierter Tieftemperaturbehandlung erfolgen. In einem Ausführungsbeispiel wird der erhaltene Schlamm zusätzlich mit Kohle versetzt, um einen synthetischen Asphalt herzustellen.

Das Problem des vorstehend geschilderten Verfahrens besteht also darin, zunächst in aufwendiger Weise eine Zerkleinerung des Altgummis zu erreichen, wobei die Schwierigkeiten hierbei noch erhöht werden, wenn es sich beim Altgummi um ein Materialgemenge, z.B. einen Reifen mit Metall- und Kordbestandteilen handelt. Weiterhin ist die Prozeßführung diskontinuierlich und erfordert eine beträchtliche von außen zuzuführende Energiemenge.

Aufgabe der Erfindung ist demgemäß die Entwicklung eines praxiswirksamen Verfahrens sowie einer dazugehörigen Anordnung zur Herstellung von Flüssiggummi im Recyclingprozeß, insbesondere durch Recycling von Altreifen, welches eine kontinuierliche Prozeßführung unter minimalem äußeren Energieaufwand gewährleistet. Desweiteren soll die Möglichkeit bestehen, die erhaltenen Produkte bereits innerhalb des Prozesses weiter zu veredeln.

Die Lösung der Aufgabe der Erfindung erfolgt mit den Merkmalen der Patentansprüche 1 bis 10.

Das erfindungsgemäße Verfahren und die zugehörige Anordnung sollen nachstehend näher beschrieben werden.
Zunächst erfolgt eine Einlage unzerkleinerter Altgummiprodukte, beispielsweise von Altreifen, in spezielle Kassetten. Diese Kassetten werden in eine Reaktionseinheit eingebracht, welche hermetisch abgeschlossen ist. In einem mit der Reaktionseinheit verbundenen Behälter erfolgt die Erhitzung einer Zersetzungsflüssigkeit. Zwischen dem Tank für die Erhitzung der Zersetzungs- und Auflöseflüssigkeit und dem eigentlichen Reaktionsgefäß wird ein Kreislauf dahingehend realisiert, daß eine ständig überwachte Konzentration und ein vorgegebener Füllungsgrad bezüglich der Zersetzungsflüssigkeit im Reaktionstank gegeben ist. Durch diese Maßnahme wird eine optimale Auflösung des Altgummis gesichert.

Erfindungsgemäß wird als Zersetzungsflüssigkeit bzw. als Zersetzungs- und Auflösemittel als hochsiedender Rückstand bei der Erdöldestillation Masut verwendet.
Die Temperatur in der Reaktionseinheit wird zwischen 350 Grad bis 500°C eingestellt.
Nach erfolgter Zersetzung der Altgummiprodukte im Reaktionsgefäß, d.h. dem thermischen Abbau des Gummis und dem Aufbrechen der Schwefelbindungen, entsteht eine Mischung aus gelösten Gummikomponenten und synthetischem Kord.
Die so erhaltene Lösung besitzt keine Bindeeigenschaften, ist jedoch hochmolekular und chemisch aktiv und kann daher zum Beinspiel im Bauwesen als Zuschlagstoff zum Bitumen verwendet werden.

Erfindungsgemäß wird die im Reaktionsgefäß enthaltene Gummilösung durch Zugabe eines Phenolformaldehydharzes bei anschließender thermischer Stabilisierung in einem Temperaturbereich von 120 bis 180°C in ein neues Produkt mit hervorragenden Bindeeigenschaften überführt.

Dieses Produkt kann als Korrosionsschutzmittel, als Bitumenaustauschstoff und ähnliches eingesetzt werden. Das Produkt selbst ist in Toluol oder einem ähnlichen Mittel auflösbar.

Erfindungswesentlich werden die während des Prozeßes im Reaktionsgefäß entstehenden Gase abgeleitet und kondensiert. Aus diesem Kondensat wird Benzin oder Dieselöl gewonnen. Die vorerwähnten Stoffe können gleichzeitig zur Erzeugung der notwendigen Prozeßwärme verwendet werden, so daß die Zufuhr externer Wärmeenergie verringert werden kann.

Das Auswaschen der im Reaktionstank bzw. der in den Kassetten zurückgebliebenen Metall- oder Kordteile wird unmittelbar im Reaktor durch Lösungsmittel realisiert. Hierfür kann eine Spülflüssigkeit über einen geeigneten Regel- und Zuführungsmechanismus dem Reaktorgefäß zugeführt werden.

Die Ausbildung der Kassetten zur Einlage und Aufnahme der Altgummiteile, insbesondere von Altreifen erfolgt derart, daß die Außenform der Kassetten der Form des Reaktionsgefässes angepaßt ist. Des weiteren sind die Kassetten von einem feinmaschigen Netz umgeben.
Mit dieser Konstruktion wird gleichzeitig eine Filterwirkung erzielt, da durch die Wahl der Maschengröße eine definierte Partikelselektion erfolgt; hierdurch gelingt es, die gelösten Gummikomponenten von anderen nichtlöslichen Bestandteilen in einfacher Weise zu trennen.
Durch die ständige Zuführung von frischen Zersetzungs- und Auflösemittel wird ein Sättigungsprozeß verhindert und die Reaktionsgeschwindigkeit erhöht sowie eine kurze Gesamtverfahrensdauer bis zur endgültigen Auflösung des Altgummis gesichert.

Zur Erhöhung des Verfahrensdurchlaufes bzw. der Effektivität des Verfahrens sind die Kassetten als Blockkonstruktion ausgeführt, wobei drei bis fünf Kassetten in Stapelform in den Reaktor eingeführt werden können.
Als Zersetzungs- und Auflösemittel wird wie bereits erwähnt Masut verwendet. Ebenso ist es möglich, eine Mischung aus Masut und einem anderen hochmolekularen, hochsiedenden Erdölprodukt zu verwenden.

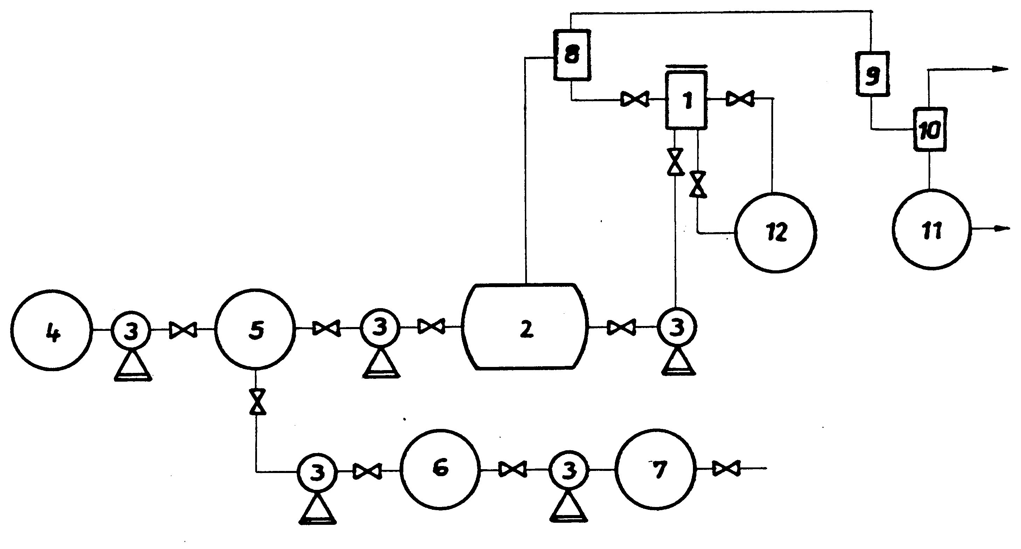

Die Erfindung soll nunmehr anhand einer beispielhaften Anordnung zur Durchführung des Verfahrens im Sinne eines Ausführungsbeispieles näher erörtert werden.
Die Figur zeigt hierbei eine prinzipielle Darstellung der Anordnung zur Realisierung des Verfahrens.

In einem Auflösebereiter 4 wird über einen Zwischenbehälter 5 die Zersetzungs- und Auflöseflüssigkeit in einen Ofen 2 geführt, wo die Erwärmung auf Reaktionstemperatur erfolgt. Über den Separator 8 und ein Pumpsystem 3 wird die Zersetzungs- und Auflöseflüssigkeit dem eigentlichen Reaktionstank 1 zugeleitet.
Der Reaktionstank 1 steht weiterhin mit einem Behälter für Spülflüssigkeit 12 in Verbindung.
Die erhaltenen Prozeßabgase werden über einen Wärmeaustauscher 9 geleitet und mittels des Separators 10 in eine gasförmige Komponente und eine flüssige Phase getrennt, wobei in einem entsprechenden Behälter 11 die flüssige Komponente gesammelt wird und zur weiteren Verarbeitung zur Verfügung steht. Wie bereits voranstehend erläutert, wird aus der flüssigen Komponente Benzin oder Dieselöl erhalten, welches wiederum zum Erhitzen der Zersetzungs- und Auflöseflüssigkeit im Ofen 2 verwendet werden kann.

Mit dem erfindungsgemäßen Verfahren zersetzt das Auflösemittel im Reaktor bzw. Reaktionstank 1 die in speziell ausgebildeten, nicht gezeigten Kassetten angeordneten Altreifen bei Reaktionstemperaturen zwischen im wesentlichen 350 bis 500°C.

Um eine Kassette mit unzerkleinerten Altreifen aufzulösen, wird beispielsweise eine Verfahrensdauer von ca. 3 bis 8 Stunden benötigt. Die Produktivität des Reaktors gemäß vorliegendem Ausführungsbeispiel beträgt pro Stunde ca. 200 bis 650 kg aufgelöste Altreifen. Das Auflösemittel wird bei einer durchschnittlichen Menge von beispielsweise 70 Tonnen nach ca. 2 bis 5 Betriebstagen ausgetauscht oder regeneriert. Der erhaltene Flüssiggummi wird mittels Pumpen 3 und über ein entsprechendes Rohrsystem in den Tank 6 gefördert, wobei Mastiken in der Mischungseinrichtung 7 erhalten werden.

Im Verlaufe der Zersetzung des Altgummis erfolgt eine Thermodestruktion. Das heißt, es werden die Schwefelverbindungen aufgebrochen und eine Lösung der Gummikomponenten und der synthetischen Kordmaterialien gebildet.
Durch Zugabe eines Phenolformaldehyharzes zu den gelösten Gummikomponenten entsteht ein hochmolekulares Produkt mit Eigenschaften besser als Bitumen.
Durch die gewählte Anordnung und den Verfahrensablauf ist ein kontinuierlicher Zersetzungsprozeß innerhalb kürzester Zeit bei optimaler Ausnutzung des Zersetzungs- und Auflösemittels gegeben. Das Auswaschen des gegebenenfalls zurückbleibenden Metalls beim Recycling von Altreifen erfolgt direkt im Reaktionsgefäß 1 durch Zuführen eines Lösungsmittels.

Die Kassetten sind beispielsweise aus Feinstahl gefertigt und mit einem Sieb ausgekleidet, welches das Lösungsmittel und gelöste Komponenten hindurchläßt, die Rückstände des thermischen Abbaus des Gummis jedoch zurückbehält. Die Maschenweite des Siebes beträgt zweckmäßigerweise 2 bis 10 mm. Wie erwähnt, ist ein blockweiser Einsatz der Kassetten im Reaktionsgefäß 1 möglich. Für die zweite Reaktionsphase wird zweckmäßigerweise ein Rührwerk eingesetzt. Durch die Anordnung mehrerer Reaktionsgefäße, welche mit dem Auflösebereiter 4 bzw. mit dem Ofen 2 selektiv verbunden sind, kann die Kontinuität des Prozesses noch erhöht werden.

Ein besonderer Vorteil des erfindungsgemäßen Verfahrens besteht darin, daß einerseits die bei der Reaktion erhaltenen Abgase aufgefangen werden und eine Umweltbelastung nicht erfolgt und andererseits durch das Gewinnen eines Kondensats aus den Reaktionsgasen und die Verwendung desselben, zumindestens teilweise, als Brennstoff zum Erreichen der Reaktionstemperatur, nur minimale äußere Energie zugeführt werden muß. Mit der Erfindung gelingt es erstmals, in einer großtechnischen Anlage in großen Mengen anfallende Altreifen in einer umweltschonenden Art und Weise einem Recyclingprozeß zuzuführen.

Der im Recyclingprozeß erhaltene Flüssiggummi bzw. die hieraus hergestellten Produkte, wie z.B. Anstrichstoffe oder Folien, weisen hervorragende Hydroisolationseigenschaften bei hoher ultravioletter Beständigkeit auf.

## Patentansprüche

1. Verfahren zur Herstellung von Flüssiggummi im Recyclingprozeß von Altgummiprodukten durch thermische Zersetzungsbehandlung,
**dadurch gekennzeichnet,**
daß in ein hermetisches Reaktionsgefäß eine Einlage unzerkleinerter Altgummiprodukte erfolgt und innerhalb des Reaktionsgefäßes die thermische Zersetzungsbehandlung bei Temperaturen im Bereich von 350 bis 500°C durchgeführt wird,
wobei als Zersetzungs- und Auflösemittel als hochsiedender Rückstand der Erdöldestillation Masut verwendet wird und,
nach erfolgter Zersetzung der Gummiprodukte im Reaktionsgefäß, d.h. dem thermischen Abbau des Gummis und dem Aufbrechen der Schwefelbindungen, gelöste Gummikomponenten entstehen.

2. Verfahren zur Herstellung von Flüssiggummi nach Anspruch 1,
**dadurch gekennzeichnet,**
daß das als Zersetzungs- und Auflösemittel verwendete Masut folgende Elementaranalyse (in Masse-%) aufweist
Kohlenstoff 85,39
Wasserstoff 11,61
Schwefel 2,53
Stickstoff 0,35
Asche 0,12.

3. Verfahren zur Herstellung von Flüssiggummi nach Anspruch 1,
**dadurch gekennzeichnet,**
daß durch Zugabe eines Phenolformaldehydharzes zu den gelösten Gummikomponenten und anschließender thermischer Stabilisierung der Mischung im Temperaturbereich von 120 bis 180°C ein neues Produkt gebildet wird, dessen Bindeeigenschaften deutlich besser als die von Bitumen sind.

4. Verfahren zur Herstellung von Flüssiggummi nach Anspruch 1,
**dadurch gekennzeichnet,**
daß nach erfolgter Zersetzung von kordhaltigen Altgummiprodukten, insbesondere Altreifen, im Reaktionsgefäß eine Mischung aus gelösten Gummikomponenten und synthetischem Kord entsteht, welche keine Bindeeigenschaften besitzt, jedoch hochmolekular und chemisch aktiv ist und als Zuschlagstoff zum Bitumen verwendet wird.

5. Verfahren zur Herstellung von Flüssiggummi nach Anspruch 1 bis 4,
**dadurch gekennzeichnet,**
daß eine kontinuierliche Verfahrensdurchführung durch eine getrennte Aufbereitung und Zuführung des Zersetzungs- und Auflösemittels gegeben ist, wobei zwischen einem Tank für die Erhitzung des Zersetzungs- und Auflösemittels und dem eigentlichen Reaktionsgefäß ein Kreislauf dahingehend realisiert wird, daß ein ständig überwachter Füllungsgrad bezüglich des Zersetzungsmittels im Reaktionstank gegeben ist.

6. Verfahren zur Herstellung von Flüssiggummi nach Anspruch 1 bis 5,
**dadurch gekennzeichnet,**
daß die im Prozeß erhaltenen Abgase aus dem Reaktionsgefäß abgeleitet und kondensiert werden und dieses Kondensat der Herstellung von Benzin oder Dieselkraftstoff, dient, welche unter anderem zur Erzeugung der notwendigen Prozeßwärme eingesetzt werden können.

7. Verfahren zur Herstellung von Flüssiggummi nach Anspruch 1 bis 6,
**dadurch gekennzeichnet,**
daß das Auswaschen von im Reaktionstank zurückgebliebenen Metallteilen unmittelbar im Reaktor durch Lösungsmittel realisiert wird, wobei hierfür eine Spülflüssigkeit dem Reaktorgefäß zugeführt wird.

8. Anordnung zur Durchführung des Verfahrens nach Anspruch 1 bis 7,
**dadurch gekennzeichnet,**
daß ein Auflösebereiter (4) über einen Zwischenbehälter (5) mit einem Ofen (2) verbunden ist, wobei im Ofen (2) die Erwärmung des Zersetzungs- und Auflösemittels auf Reaktionstemperatur erfolgt, über ein Pumpsystem (3) das Zersetzungs- und Auflösemittel einem Reaktionstank (1) zugeführt wird und der Reaktionstank (1) weiterhin mit einem Behälter für Spülflüssigkeit (12) in Verbindung steht sowie zur Kondensation der Prozeßabgase Wärmeaustauscher (9) vorhanden sind, wobei die erhaltenen Kondensate über einen Separator (10) in einem Behälter (11) gesammelt werden und zur weiteren Verarbeitung zur Verfügung stehen.

9. Anordnung zur Durchführung des Verfahrens nach Anspruch 1 bis 8,
**dadurch gekennzeichnet,**
daß durch die Anordnung mehrerer Reaktionsgefäße (1), welche mit dem Auflösebereiter (4) bzw. mit dem Ofen (2) selektiv verbunden sind, die Kontinuität des Prozesses erhöht wird.

10. Anordnung zur Durchführung des Verfahrens nach Anspruch 1 bis 9,
**dadurch gekennzeichnet,**
daß in das Reaktionsgefäß (1) Kassetten eingestellt sind, wobei die Kassetten mit einem Sieb vorgegebener Maschenweite ausgekleidet sind.
